# EUROPÄISCHE PATENTSCHRIFT

(11) **EP 1 409 863 B1**
(45) Veröffentlichungstag und Bekanntmachung des Hinweises auf die Patenterteilung: **09.07.2008**
(21) Anmeldenummer: 02726117.1
(22) Anmeldetag: 22.02.2002
(51) Int. Cl.: F02D 41/02, F02D 41/30, F02D 41/40

(54) **VERFAHREN ZUR ANHEBUNG EINER ABGASTEMPERATUR EINER FREMDGEZÜNDETEN, DIREKTEINSPRITZENDEN VERBRENNUNGSKRAFTMASCHINE**
METHOD FOR INCREASING AN EXHAUST GAS TEMPERATURE OF A SPARK-IGNITION, DIRECT INJECTION INTERNAL COMBUSTION ENGINE
PROCEDE SERVANT A AUGMENTER LA TEMPERATURE D'ECHAPPEMENT D'UN MOTEUR A COMBUSTION INTERNE A INJECTION DIRECTE ET ALLUMAGE COMMANDE

(30) Priorität: 15.03.2001 DE 10114054
(43) Veröffentlichungstag der Anmeldung: 21.04.2004
(73) Patentinhaber: Volkswagen Aktiengesellschaft, 38436 Wolfsburg (DE)
(72) Erfinder: POTT, Ekkehard, 38518 Gifhorn (DE); BREE, Eric, 38557 Osloss (DE); PHILIPP, Kai, 38179 Lagesbüttel (DE); ZILLMER, Michael, 38173 Sickte (DE)
(74) Vertreter: Schneider, Henry
(86) Internationale Anmeldenummer: PCT/EP2002/001938
(87) Internationale Veröffentlichungsnummer: WO 2002/075137

(56) Entgegenhaltungen:
- EP-A- 0 943 793
- EP-A- 0 982 489
- WO-A-00/08328
- WO-A-00/57045
- US-A- 5 967 113

## Beschreibung

Die Erfindung betrifft ein Verfahren zur zumindest zeitweiligen Anhebung einer Abgastemperatur einer fremdgezündeten, direkteinspritzenden Verbrennungskraftmaschine mit den Merkmalen des Oberbegriffs des Anspruchs 1 sowie eine Verwendung des Verfahrens.

Eine Anhebung einer Verbrennungs- beziehungsweise Abgastemperatur einer Verbrennungskraftmaschine ist in bestimmten Betriebssituationen erwünscht, insbesondere nach einem Motorkaltstart, wenn der Verbrennungskraftmaschine nachgeschaltete Katalysatoren ihre Betriebstemperatur noch nicht erreicht haben. Um ihre Betriebsbereitschaft zu erhalten, müssen die Katalysatoren sich mindestens auf eine katalysatorspezifische Anspring- oder Light-off-Temperatur erwärmt haben. Dabei bezeichnet die Anspringtemperatur eine Temperatur, bei der der Katalysator einen Konvertierungsgrad von 50 % aufweist. Bis zu einem Zeitpunkt nach Motorkaltstart, an dem der Katalysator seine Anspringtemperatur erreicht hat, gelangen Schadstoffe des Abgases weitgehend unkonvertiert in die Atmosphäre. Um eine Abgastemperatur anzuheben und somit einen Katalysatorwarmlauf zu beschleunigen, sind verschiedene Strategien bekannt.

Bekannt ist, einen Zündwinkel, also einen Zeitpunkt, an dem eine Zündung eines Luft-Kraftstoff-Gemisches in einem Zylinder erfolgt, während des Warmlaufs in Richtung spät, bezüglich eines Zündwinkels mit höchstem Wirkungsgrad, zu verstellen. Durch diese Zündwinkelspätverstellung wird der Arbeitswirkungsgrad der Verbrennung vermindert und gleichzeitig eine Abgastemperatur erhöht. Infolge des heißeren Abgases wird die Katalysatoraufheizung beschleunigt. Das Verfahren der Spätzündung findet seine Begrenzung bei Zündwinkeln, bei denen eine Laufunruhe der Verbrennungskraftmaschine in unzulässiger Weise steigt und eine zuverlässige Zündung nicht mehr gewährleistet werden kann.

Beispielsweise ist aus EP 0 719 937 A2 ein Verfahren zur Aufheizung eines Katalysators eines konventionellen Ottomotors (ohne Kraftstoffdirekteinspritzung) bekannt, wobei ein verzögerter Zündwinkel von bis zu 23° nach ZOT eingestellt wird.

Ein weiteres Verfahren zur Erhöhung der Abgastemperatur wird durch eine so genannte Mehrfacheinspritzung eröffnet, welche in jüngster Zeit für direkteinspritzende, fremdgezündete Verbrennungskraftmaschinen beschrieben wurde, bei denen der Kraftstoff mittels Einspritzventilen direkt in einen Brennraum eines Zylinders eingespritzt wird (WO 00/08328, EP 0 982 489 A2, WO 00/57045). Dabei wird eine während eines Arbeitsspiels eines Zylinders zuzuführende Kraftstoffgesamtmenge aufgeteilt in zwei Portionen mit zwei Einspritzvorgängen einem Brennraum des Zylinders zugeführt. Eine erste, frühe Einspritzung (Homogeneinspritzung) erfolgt während eines Ansaugtaktes des Zylinders derart, dass die eingespritzte Kraftstoffmenge zum nachfolgenden Zündzeitpunkt eine zumindest weitgehend homogene Verteilung im Brennraum aufweist. Eine zweite, späte Einspritzung (Schichteinspritzung) wird dagegen während eines anschließenden Verdichtungstaktes, insbesondere während der zweiten Hälfte des Verdichtungstaktes, durchgeführt und führt zu einer so genannten Schichtladung, bei der die eingespritzte Kraftstoffwolke sich im Wesentlichen im Bereich um eine Zündkerze des Zylinders konzentriert. Somit liegt im Mehrfacheinspritzungsbetrieb der Verbrennungskraftmaschine ein Mischbetrieb aus Schichtladung und Homogenladung vor. Der Mehrfacheinspritzungsbetrieb führt wegen seines speziell gearteten Brennverlaufs zu einer erhöhten Abgastemperatur gegenüber reinem Homogenbetrieb. Neben der erhöhten Abgastemperatur besteht ein weiterer Vorteil der Mehrfacheinspritzung in einer verminderten Rohemission von Stickoxiden NOₓ und unverbrannten Kohlenwasserstoffen HC, die zu einer Senkung des Schadstoffdurchbruchs während der Warmlaufphase führt.

Gemäß den oben genannten Schriften WO 00/08328 A1 und EP 0 982 489 A2 erfolgt die Schichteinspritzung zum Zweck der Katalysatorheizung mit einem Ansteuerbeginn des Einspritzwinkels von 120° bis 60° vor ZOT, jedoch nicht später als 45° vor ZOT. Diese Mehrfacheinspritzung wird mit einer Spätzündung mit einem Zündwinkel bei ZOT kombiniert, wohingegen der wirkungsgradoptimierte Zündwinkel bei etwa 10° vor ZOT liegt. Auch aus EP 0 943 793 A2 ist ein Verfahren zur Katalysatorheizung direkteinspritzender Ottomotoren bekannt, bei dem eine Kombination aus Mehrfacheinspritzung und Spätzündung durchgeführt wird, wobei die Schichteinspritzung im Verdichtungstakt durchgeführt wird. Zahlenmäßige Angaben zum Kurbelwellenwinkel der Schichteinspritzung oder des Zündpunktes werden nicht offenbart.

Aus bislang veröffentlichten Ergebnissen aus Mehrfacheinspritzungsexperimenten geht hervor, dass zwar insgesamt ein deutlicher Anstieg der Abgastemperatur im Mehrfacheinspritzungsbetrieb gegenüber dem Einfacheinspritzungsbetrieb erzielt wird, jedoch in den ersten 12 bis 15 Sekunden nach Motorstart kein signifikanter Temperaturunterschied zwischen beiden Betriebsarten beobachtet wird.

Der Erfindung liegt daher die Aufgabe zugrunde, ein Verfahren zur Anhebung einer Abgastemperatur zur Verfügung zu stellen, welches insbesondere in den ersten 15 Sekunden nach Motorstart eine deutliche Temperatursteigerung gegenüber herkömmlichen Strategien bewirkt.

Diese Aufgabe wird durch ein Verfahren mit den Merkmalen des Anspruchs 1 gelöst. Erfindungsgemäß wird im Mehrfacheinspritzungsbetrieb ein Ansteuerende eines Einspritzwinkels der spätesten Einspritzung zumindest zeitweise zwischen 80 und 10° vor einem oberen Zündtotpunkt (ZOT) eingestellt und/oder ein Zündwinkel zumindest zeitweise zwischen 10 und 45° nach ZOT eingestellt. Die beanspruchten Bereiche von Einspritzwinkel und Zündwinkel liegen, verglichen mit bekannten Verfahren, in extrem späten Phasen eines Arbeitsspiels des Zylinders. Hierdurch lassen sich Abgastemperaturen erzeugen, die gegenüber bekannten Verfahren weit hinaus gehen. Somit lässt sich insbesondere ein schneller Warmlauf mindestens eines ersten nachgeschalteten Katalysators unterhalb 15 s nach Motorstartende bewirken und eine Schadstoffemission verringern. Gleichzeitig wird ein Winkelabstand zwischen Ansteuerende der späten Einspritzung und dem Zündwinkel abhängig von der Motordrehzahl und/oder einem Einspritzdruck variiert, wobei der Abstand mit steigender Motordrehzahl abgehoben und mit steigendem Einspritzdruck abgesenkt wird. Diese Ausführung gewährleistet stets eine optimale Zeitspanne für die Gemischaufbereitung.

Es ist bevorzugt vorgesehen, gleichzeitig sowohl das Ansteuerende des Einspritzwinkels der spätesten Einspritzung als auch den Zündwinkel innerhalb der genannten Kurbelwellenbereiche einzustellen. Auf diese Weise können innerhalb dieser Bereiche besonders späte Punkte für Einspritzung und Zündung realisiert und maximale Abgastemperaturen erzielt werden.

Nach einer besonders vorteilhaften Ausgestaltung des Verfahrens wird das Ansteuerende des Einspritzwinkels zwischen 45 und 25° vor ZOT, insbesondere zwischen 40 und 35° vor ZOT, eingestellt. Für den Zündzeitpunkt sind Winkel zwischen 20 und 45° nach ZOT, insbesondere zwischen 25 und 35° nach ZOT, besonders bevorzugt.

Als vorteilhaft hat sich erwiesen, den Winkelabstand zwischen Ansteuerende der späten Einspritzung und Zündwinkel auf 50 bis 80°, insbesondere auf 60 bis 70°, einzustellen. Die genannten Werte beziehen sich auf Motordrehzahlen im Bereich von 1000 bis 1500 min⁻¹.

Es ist weiterhin vorgesehen, dass die Mehrfacheinspritzung zwei Einspritzungen umfasst, wobei eine erste, frühe Einspritzung im Wesentlichen während eines Ansaugtaktes, insbesondere einer ersten Hälfte des Ansaugtaktes, erfolgt. Aufgrund des großen zeitlichen Abstandes zwischen Einspritzzeitpunkt der frühen Einspritzung und dem Zündpunkt nimmt der in der frühen Einspritzung zugeführte Kraftstoff zum Zündzeitpunkt eine im Wesentlichen homogene Verteilung im Brennraum des Zylinders ein. Hingegen erfolgt die zweite, späte Einspritzung vorzugsweise in der zweiten Hälfte des Verdichtungstaktes und bildet zum Zündzeitpunkt eine im Wesentlichen im Bereich einer Zündkerze des Brennraums befindliche Ladungswolke aus. Die Erzeugung einer derartigen Schichtladung ist prinzipiell von schichtladefähigen Verbrennungskraftmaschinen bekannt, wobei die Ausbildung und Lenkung der Schichtladungswolke durch geeignete Ausgestaltungen eines Kolbenbodens sowie durch Strömungsverhältnisse beeinflussende bauliche Maßnahmen in einer Lufteinlassleitung, beispielsweise in Form von Ladungsbewegungsklappen, unterstützt werden kann. Dabei wird im ersten Falle von einem wandgeführten Schichtladungsbetrieb und im letzteren Falle von einem luftgeführten Betrieb gesprochen. Vorzugsweise wird das vorliegende Verfahren bei Verbrennungskraftmaschinen angewandt, bei denen der Schichtladungsbetrieb durch eine Kombination von luft- und wandführenden Maßnahmen aufrecht erhalten wird. Auf diese Weise lassen sich besonders gut definierte und somit zündwillige und brennbare Ladungswolken erzeugen. Insbesondere hat sich das Verfahren für schichtladefähige Verbrennungskraftmaschinen bewährt, die mit einer Luftströmung im Brennraum arbeiten, die eine insbesondere quer zur Kolbenbewegung verlaufende Drallachse aufweist.

Wie bereits einleitend erläutert wurde, führt eine derartige gemischte Kraftstoffaufbereitung (homogen/geschichtet) zu einer Erhöhung der Abgastemperatur und gleichzeitig zu einer Absenkung einer Rohemission an unverbrannten Kohlenwasserstoffen und Stickoxiden. Dabei werden die Kraftstoffanteile der beiden Einspritzungen vorzugsweise so gewählt, dass die erste Einspritzung (Homogeneinspritzung) zu einem sehr mageren, allein nicht zündfähigen Luft-Kraftstoff-Gemisch führt, welches nur mit Hilfe der Schichtladungswolke der zweiten Einspritzung (Schichteinspritzung) gezündet und verbrannt werden kann. Um ein vollständiges Abbrennen der Homogenladung zu gewährleisten, sollte die in der Homogeneinspritzung zugeführt Kraftstoffmenge 20 % der insgesamt zugeführten Kraftstoffmenge nicht unterschreiten. Vorzugsweise beträgt der Anteil des in der Schichteinspritzung zugeführten Kraftstoffes mindestens 60 %, insbesondere mindestens 70 %. Vorzugsweise wird ferner insgesamt ein leicht mageres bis stöchiometrisches Luft-Kraftstoff-Gemisch mit einem Lambdawert zwischen 1 und 1,2 eingestellt. Hierdurch wird genutzt, dass eine Anspringtemperatur des Katalysators in einer mageren Abgasatmosphäre stets niedriger als in einer stöchiometrischen Atmosphäre ist.

Das erfindungsgemäße Verfahren zur Anhebung der Abgastemperatur wird vorzugsweise zur Aufheizung mindestens eines der Verbrennungskraftmaschine nachgeschalteten Katalysators, insbesondere nach einem Motorstart, verwendet. Vorzugsweise wird das Verfahren eingesetzt, um einen motornahen Vorkatalysator wenigstens annähernd auf seine Anspringtemperatur zu bringen. Hierfür kann eine Temperatur des Katalysators gemessen und/oder modelliert werden, um eine Dauer der Heizmaßnahmen sowie eine Stärke derselben, insbesondere eine Vorgabe von Einspritz- und Zündwinkel, zu bestimmen. Alternativ kann die Katalysatortemperatur auch anhand einer seit Motorstart verstrichenen Zeit und/oder zurückgelegter Strecken und/oder seit Motorstart erfolgten Kurbelwellenumdrehungen und/oder einem seit Motorstart kumulierten Abgaswärmestrom ermittelt werden. Hierfür können erforderliche Kennfelder in einer Motorsteuerung abgelegt werden.

Weitere vorteilhafte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: schematisch eine Verbrennungskraftmaschine mit nachgeschaltetem Katalysatorsystem;
- Figur 2: von oben nach unten einen zeitlichen Ablauf einer zweiten, späten Kraftstoffeinspritzung und einer Zündung in einem Mehrfacheinspritzungsbetrieb gemäß einem bekannten Verfahren;
- Figur 3: einen zeitlichen Ablauf von Kraftstoffeinspritzung und Zündung nach einer vorteilhaften Ausgestaltung des erfindungsgemäßen Verfahrens und
- Figur 4: zeitliche Verläufe einer Katalysatortemperatur nach einem Motorkaltstart gemäß unterschiedlichen Strategien zur Anhebung einer Abgastemperatur.

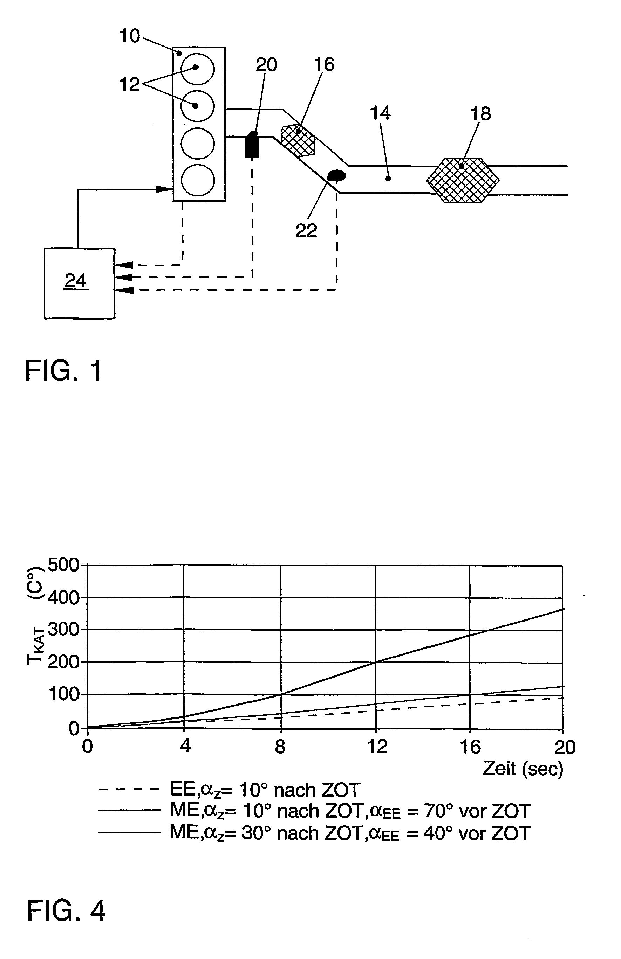

Figur 1 zeigt eine fremdgezündete, magerlauffähige Verbrennungskraftmaschine 10, die beispielsweise vier Zylinder 12 umfasst. Die Verbrennungskraftmaschine 10 verfügt über ein nicht dargestelltes Direkteinspritzungssystem, über welches eine Kraftstoffeinspritzung unmittelbar in die Zylinder 12 erfolgt. Ein von der Verbrennungskraftmaschine 10 erzeugtes Abgas wird durch einen Abgaskanal 14 und das hierin angeordnete Katalysatorsystem 16, 18 geführt. Das Katalysatorsystem umfasst einen motornah angeordneten, kleinvolumigen Vorkatalysator 16 sowie einen Hauptkatalysator 18, beispielsweise einen NOₓ-Speicherkatalysator, der üblicherweise an einer Unterbodenposition angeordnet ist. Eine Regelung eines der Verbrennungskraftmaschine 10 zugeführten Luft-Kraftstoff-Verhältnisses erfolgt durch Messung einer Sauerstoffkonzentration des Abgases mit Hilfe einer Lambdasonde 20. Ein Temperatursensor 22, der stromab des Vorkatalysators 16 im Abgaskanal 14 angeordnet ist, ermöglicht die Messung einer Abgastemperatur und somit Rückschlüsse auf die Temperatur des Vor- und/oder des Hauptkatalysators 16, 18. Die von den Sensoren 20, 22 bereitgestellten Signale sowie verschiedene Betriebsparameter der Verbrennungskraftmaschine 10 werden an ein Motorsteuergerät 24 übermittelt, wo sie gemäß abgespeicherter Algorithmen und Kennfelder ausgewertet und verarbeitet werden. In Abhängigkeit dieser Signale erfolgt eine Steuerung der Verbrennungskraftmaschine 10 durch das Motorsteuergerät 24, insbesondere des Luft-Kraftstoff-Verhältnisses, eines Einspritzungsmodus sowie der Zündung.

Wird mit Hilfe des Temperatursensors 22 eine Temperatur des Katalysatorsystems, insbesondere des Vorkatalysators 16, ermittelt, die unterhalb einer für eine ausreichende Schadstoffkonvertierung notwendigen Anspringtemperatur liegt, beispielsweise nach einem Motorkaltstart, so leitet das Motorsteuergerät 24 verschiedene Maßnahmen zur Anhebung der Abgastemperatur ein. Insbesondere wird der Betrieb der Verbrennungskraftmaschine 10 von Einfach- in Mehrfacheinspritzung umgestellt. Dabei erfolgt eine erste, frühe Einspritzung, vorzugsweise innerhalb der ersten Hälfte eines Ansaugtaktes eines Zylinders 12, so dass der in dieser Einspritzung zugeführte Kraftstoff zu einem nachfolgenden Zündzeitpunkt im Wesentlichen in homogener Brennraumverteilung vorliegt (Homogeneinspritzung). Eine zweite, späte Kraftstoffeinspritzung (Schichteinspritzung) erfolgt mit einem Ansteuerende, das zumindest zeitweise bei Motordrehzahlen von 1000 und 1500 min⁻¹ zwischen 80 und 10° vor einem oberen Zündtotpunkt (ZOT), das heißt in der zweiten Hälfte eines Verdichtungstaktes, liegt. Gleichzeitig wird ein Zündwinkel im Mehrfacheinspritzungsbetrieb bei Motordrehzahlen von 1000 und 1500 min⁻¹ von 10 bis 45° nach ZOT zumindest zeitweise eingestellt. Sowohl die besonderen Verbrennungsabläufe des Mehrfacheinspritzungsbetriebes als auch die extreme Spätzündung bewirken eine Erhöhung der Abgastemperatur und somit einen beschleunigten Warmlauf des Katalysatorsystems 16, 18.

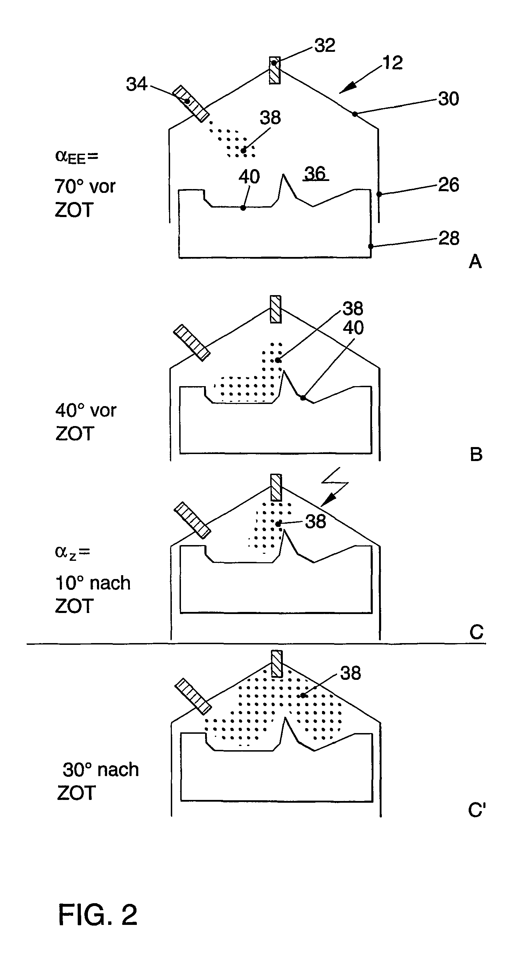

Figur 2 stellt in schematischer Weise die Abläufe der späten Schichteinspritzung und der Zündung während eines Verdichtungstaktes eines Zylinders gemäß einem bekannten Verfahren dar (Stand der Technik). Der insgesamt mit 12 bezeichnete Zylinder umfasst ein Zylindergehäuse 26 und einen hierin axial beweglich angeordneten Kolben 28. In einer zentralen Position eines Zylinderkopfes 30 befindet sich eine Zündkerze 32. Seitlich im Zylinderkopf 30 angeordnet befindet sich ein Kraftstoffeinspritzventil 34, mittels welchem Kraftstoff unmittelbar in den Brennraum 36 des Zylinders 12 eingespritzt wird. Der Einfachheit halber sind ebenfalls im Zylinderkopf 30 angeordnete Luftein- und -auslasskanäle nicht dargestellt. Gemäß des bekannten Verfahrens wird ein Ende der späten Schichteinspritzung bei einem Einspritzwinkel α_{EE} von typischerweise 70° vor ZOT angesteuert. Dieser Zeitpunkt ist im oberen Teil A der Figur 2 dargestellt, wobei mit 38 die gerade in den Brennraum 36 eingebrachte Ladungswolke bezeichnet ist, die sich noch in der Nähe des Einspritzventils 34 befindet und einen relativ großen Abstand zu einem Kolbenboden 40 des gerade in einer Aufwärtsbewegung befindlichen Kolbens 28 besitzt.

Im weiteren Verlauf des Arbeitsspiels des Zylinders 12 bewegen sich die Ladungswolke 38 und der Kolben 28 aufeinander zu. Bei einem Kurbelwellenwinkel von 40° vor ZOT (Figur 2B) hat die Ladungswolke 38 das Einspritzventil 34 bereits verlassen und eine in den Kolbenboden 40 eingearbeitete Mulde bereits erreicht. Durch die spezielle Ausgestaltung des Kolbenbodens 40 wird die Ladungswolke 38 in Richtung der Zündkerze 32 umgelenkt. Diese Ladungsbewegung kann zudem besonders vorteilhaft durch bestimmte Luftstromverhältnisse im Brennraum 36 unterstützt werden.

Teil C der Abbildung zeigt Kolbenposition und Ladungsverhältnisse zu einem Zündzeitpunkt α_{Z} von 10° nach ZOT, welcher gemäß dem Stand der Technik den spätestmöglichen Zündzeitpunkt für einen aussetzerfreien und HC-armen Betrieb darstellt. Mit dieser hier dargestellten Verfahrensausführung lässt sich zwar die Abgastemperatur steigern, jedoch wird in den ersten 12 bis 10 Sekunden nach Motorstart eine nur sehr geringe Heizwirkung auf die Katalysatoren 16, 18 beobachtet, wie anhand von Figur 4 noch gezeigt wird. Aus dem unteren Teil C' der Figur 2 geht hervor, dass ein noch späterer Zündzeitpunkt, beispielsweise bei 30° nach ZOT, nicht praktikabel ist, da die Ladungswolke 38 zu diesem Zeitpunkt sich im Brennraum 36 bereits stark verteilt hat und somit sehr ausgemagert, das heißt kraftstoffarm, ist. Dies führt zu schlechten Zündeigenschaften mit einer hohen Aussetzerrate und hohen HC-Rohemissionen.

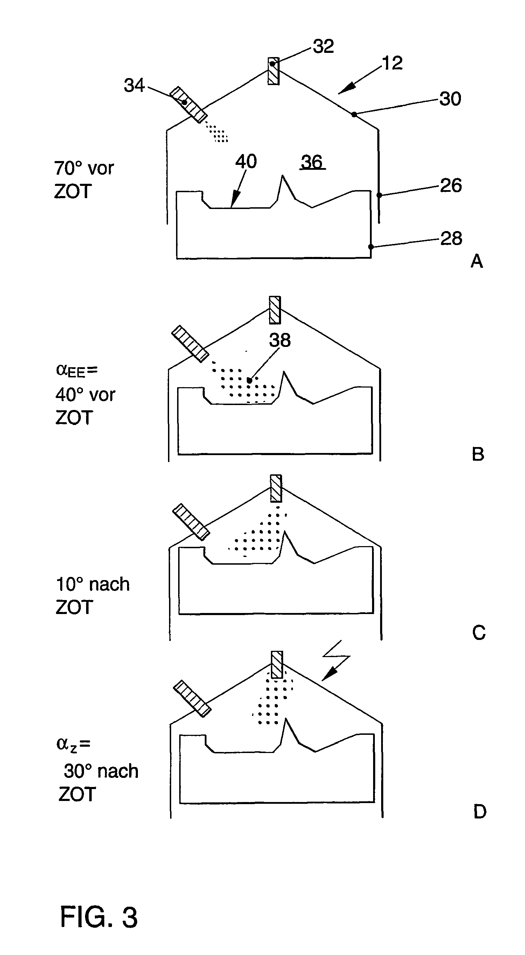

Erfindungsgemäß werden sowohl Einspritzwinkel α_{EE} als auch Zündwinkel α_{Z} zu sehr viel späteren Zeitpunkten vorgegeben. Ein entsprechender Ablauf ist in Figur 3 dargestellt. Gleiche Bezugszeichen kennzeichnen die gleichen Elemente wie in Figur 2 und werden nicht noch einmal erläutert. Zu einem Zeitpunkt 70° vor ZOT befindet sich die Einspritzung der späten Schichteinspritzung des Mehrfacheinspritzungsbetriebs noch in der Anfangsphase (Figur 3 A). Das Ansteuerende α_{EE} der Schichteinspritzung erfolgt erfindungsgemäß zu einem sehr späten Zeitpunkt, in diesem Beispiel bei 40° vor ZOT (Figur 3 B). Zu diesem Zeitpunkt erreicht die gerade das Einspritzventil 34 verlassende Ladungswolke 38 bereits den in der Nähe befindlichen Kolbenboden 40.

Im weiteren Verlauf wird die Ladungswolke 38 durch die Mulde des Kolbenbodens 40 zur Zündkerze 32 gelenkt. 10° nach ZOT hat die Ladungswolke 38 die Zündkerze, anders als gemäß dem Stand der Technik, noch nicht oder allenfalls zu einem geringen Teil erreicht, so dass eine Zündung zu diesem Zeitpunkt noch nicht oder noch nicht optimal möglich ist (Figur 3 C). Die Zündung erfolgt vielmehr, wenn der Kolben 28 sich bereits wieder in der Abwärtsbewegung befindet, insbesondere bei einem Zündwinkel von 20 bis 35° nach ZOT, vorzugsweise 30° nach ZOT (Figur 3 unten). Besonders späte Zündzeitpunkte und damit besonders hohe Abgastemperaturen lassen sich erzielen bei Brennverfahren, bei denen die Ausbildung und Lenkung der Schichtladungswolke 38 sowohl durch die spezielle Kolbenbodengestaltung erfolgt, das heißt wandgeführt, als auch durch geeignete Luftströmungen, die durch geeignete Ausgestaltungen des Lufteinlasskanals erzeugt werden (Luftführung). Insbesondere sind Luftströmungen mit einer Drallachse, die vorzugsweise quer zur Kolbenbewegung verläuft, im Zusammenhang mit dem erfindungsgemäßen Verfahren geeignet. Bei dieser Gemischaufbereitung bleibt die zündfähige Gemischwolke 38 lange im Bereich der Zündkerze erhalten, so dass hier besonders späte Zündwinkel α_{Z} möglich sind.

Drei unterschiedliche Strategien zur Beschleunigung eines Katalysatorwarmlaufs sind im Ergebnis in Figur 4 vergleichend dargestellt. Gezeigt sind Verläufe einer Katalysatortemperatur T_{Kat} des etwa 30 mm stromab der 2,0-Liter-Verbrennungskraftmaschine 10 mit Direkteinspritzung angeordneten Vorkatalysators 16 nach einem Motorstart. Die Katalysatortemperatur T_{Kat} wurde mit einer etwa zentrisch im Vorkatalysator 16 zirka 20 mm stromab einer Anströmfläche angeordneten Temperaturmessstelle ermittelt. Bei herkömmlicher Einfacheinspritzung EE und reinem Homogenbetrieb sowie einem Zündwinkel α_{Z} von 10° nach ZOT erreicht die Katalysatortemperatur T_{Kat} des Vorkatalysators 16 nach 12 Sekunden nach Motorstart etwa 50 °C (unterbrochene Linie). Mit dem anhand von Figur 2 dargestellten bekannten Verfahren, das heißt mit Mehrfacheinspritzung ME mit einem Einspritzende der Schichteinspritzung α_{EE} von 70° vor ZOT und einem Zündwinkel α_{Z} von 10° nach ZOT, erreicht der Vorkatalysator 16 nach 12 Sekunden eine Temperatur T_{Kat} von etwa 65 °C. Dies zeigt deutlich, dass der herkömmliche Mehrfacheinspritzungsbetrieb zumindest in den ersten Sekunden nach Motorstart nur eine geringe Temperaturerhöhung gegenüber dem Einfacheinspritzungsbetrieb bewirkt. Hingegen wird mit dem erfindungsgemäßen Verfahren nach der in Figur 3 dargestellten Ausführungsform, das heißt einem Einspritzende α_{EE} von 40° vor ZOT und einem Zündwinkel α_{Z} von 30° nach ZOT, eine Katalysatortemperatur T_{Kat} nach 12 Sekunden von 200 °C erreicht. Dies zeigt deutlich, dass insbesondere eine Kombination aus Späteinspritzung und Spätzündung ein deutlich schnelleres Aufheizen des Katalysators und somit eine starke Schadstoffemissionsminderung bewirkt.

### BEZUGSZEICHENLISTE

- 10: Verbrennungskraftmaschine
- 12: Zylinder
- 14: Abgaskanal
- 16: Vorkatalysator
- 18: Hauptkatalysator / NOₓ-Speicherkatalysator
- 20: Lambdasonde
- 22: Temperatursensor
- 24: Motorsteuergerät
- 26: Zylindergehäuse
- 28: Kolben
- 30: Zylinderkopf
- 32: Zündkerze
- 34: Einspritzventil
- 36: Brennraum
- 38: Ladungswolke
- 40: Kolbenboden

- α_{Z}: Zündwinkel
- α_{EE}: Ansteuerende Schichteinspritzung
- EE: Einfacheinspritzung
- ME: Mehrfacheinspritzung
- T_{Kat}: Temperatur Vorkatalysator
- ZOT: oberer Zündtotpunkt

## Patentansprüche

1. Verfahren zur zumindest zeitweiligen Anhebung einer Abgastemperatur einer fremdgezündeten, direkteinspritzenden Verbrennungskraftmaschine (10) durch mindestens eine motorische Maßnahme, wobei die mindestens eine motorische Maßnahme eine Zündwinkelspätverstellung und eine Mehrfacheinspritzung (ME) umfasst und bei der Mehrfacheinspritzung (ME) innerhalb eines Ansaug- und Verdichtungstaktes eines Zylinders (12) der Verbrennungskraftmaschine (10) mindestens zwei Kraftstoffeinspritzungen in den Zylinder (12) durchgeführt werden und die späteste dieser Einspritzungen während eines Verdichtungstaktes des Zylinders (12) mit einem Ansteuerende eines Einspritzwinkels (α_{EE}) von zumindest zeitweise zwischen 80 und 10° vor einem oberen Zündtotpunkt (ZOT) erfolgt, **dadurch gekennzeichnet, dass** ein Zündwinkel (α_{Z}) zumindest zeitweise zwischen 10 und 45° nach ZOT eingestellt wird und ein Winkelabstand zwischen Einspritzende (α_{EE}) der spätesten Einspritzung und dem Zündwinkel (α_{Z}) abhängig von einer Motordrehzahl und/oder einem Einspritzdruck variiert wird, wobei der Winkelabstand mit steigender Motordrehzahl vergrößert und mit steigendem Einspritzdruck verringert wird.

2. Verfahren nach Anspruch 1, **dadurch gekennzeichnet, dass** das Ansteuerende des Einspritzwinkels (α_{EE}) der spätesten Einspritzung zwischen 45 und 25° vor ZOT, insbesondere auf 40° bis 35° vor ZOT, eingestellt wird.

3. Verfahren nach Anspruch 1 oder 2, **dadurch gekennzeichnet, dass** der Zündwinkel (α_{Z}) zwischen 20 und 45° nach ZOT, insbesondere zwischen 25 und 35° nach ZOT, eingestellt wird.

4. Verfahren nach Anspruch 1, **dadurch gekennzeichnet, dass** bei einer Motordrehzahl zwischen 1000 und 1500 min⁻¹ ein Winkelabstand zwischen Ansteuerende des Einspritzwinkels (α_{EE}) der späten Einspritzung und Zündwinkel (α_{Z}) von 50 bis 80°, insbesondere von 60 bis 70°, eingestellt wird.

5. Verfahren nach einem der vorhergehenden Ansprüche, **dadurch gekennzeichnet, dass** die Mehrfacheinspritzung (ME) zwei Einspritzungen umfasst, wobei die erste, frühe Einspritzung im Wesentlichen während eines Ansaugtaktes, insbesondere einer ersten Hälfte des Ansaugtaktes, erfolgt und der in der frühen Einspritzung zugeführte Kraftstoff zum Zündzeitpunkt eine im Wesentlichen homogene Verteilung im Brennraum (36) des Zylinders (12) einnimmt.

6. Verfahren nach Anspruch 5 ,**dadurch gekennzeichnet, dass** die zweite, späte Einspritzung in der zweiten Hälfte des Verdichtungstaktes erfolgt und der in der späten Einspritzung zugeführte Kraftstoff sich zum Zündzeitpunkt im Wesentlichen im Bereich einer Zündkerze (32) des Brennraums (36) des Zylinders (12) konzentriert.

7. Verfahren nach einem der vorhergehenden Ansprüche, **dadurch gekennzeichnet, dass** die Verbrennungskraftmaschine (10) schichtladefähig ist, wobei der Schichtladungsbetrieb luft- und/oder wandgeführt wird.

8. Verfahren nach einem der vorhergehenden Ansprüche, **dadurch gekennzeichnet, dass** eine Brennraumluftströmung der Verbrennungskraftmaschine (10) eine, insbesondere quer zur Kolbenbewegung verlaufende Drallachse aufweist.

9. Verfahren nach einem der vorhergehenden Ansprüche, **dadurch gekennzeichnet, dass** ein Anteil des in der späten Einspritzung eingespritzten Kraftstoffes an einer eingespritzten Gesamtkraftstoffmenge mindestens 60 %, insbesondere mindestens 70 %, beträgt.

10. Verwendung eines Verfahrens nach einem der Ansprüche 1 bis 9 zur Aufheizung mindestens eines der Verbrennungskraftmaschine (10) nachgeschalteten Katalysators (16, 18), insbesondere nach einem Motorstart.

11. Verwendung nach Anspruch 10, **dadurch gekennzeichnet, dass** eine Temperatur (Tₖₐₜ) des Katalysators (16, 18) gemessen und/oder modelliert wird.

12. Verwendung nach Anspruch 11, **dadurch gekennzeichnet, dass** eine Temperatur (Tₖₐₜ) des Katalysators (16, 18) anhand einer seit Motorstart verstrichenen Zeit und/oder seit Motorstart erfolgten Kurbelwellenumdrehungen und/oder einer seit Motorstart zurückgelegten Strecke und/oder einem kumulierten Abgaswärmestrom ermittelt wird.

## Claims

1. Method for at least temporarily raising an exhaust-gas temperature of a spark-ignition, direct-injection internal combustion engine (10) by means of at least one engine-related measure, with the at least one engine-related measure comprising an ignition angle retardation and a multiple injection (ME), and with at least two fuel injections into a cylinder (12) of the internal combustion engine (10) being carried out within an intake and compression stroke of the cylinder (12) during the multiple injection (ME), and with the latest of said injections taking place during a compression stroke of the cylinder (12) with an activation end of an injection angle (α_{EE}) of at least temporarily between 80 and 10° before ignition top dead centre (ZOT), **characterized in that** an ignition angle (α_{Z}) is adjusted at least temporarily between 10 and 45° after ZOT and an angular interval between the injection end (α_{EE}) of the latest injection and the ignition angle (α_{Z}) is varied as a function of an engine rotational speed and/or an injection pressure, with the angular interval being enlarged with rising engine rotational speed and being reduced with rising injection pressure.

2. Method according to Claim 1, **characterized in that** the activation end of the injection angle (α_{EE}) of the latest injection is adjusted between 45 and 25° before ZOT, in particular to 40° to 35° before ZOT.

3. Method according to Claim 1 or 2, **characterized in that** the ignition angle (α_{Z}) is adjusted between 20 and 45° after ZOT, in particular between 25 and 35° after ZOT.

4. Method according to Claim 1, **characterized in that**, at an engine rotational speed of between 1000 and 1500 rev/min, an angular interval between the activation end of the injection angle (α_{EE}) of the latest injection and the ignition angle (α_{Z}) is adjusted from 50 to 80°, in particular from 60 to 70°.

5. Method according to one of the preceding claims, **characterized in that** the multiple injection (ME) comprises two injections, with the first, early injection taking place substantially during an intake stroke, in particular during a first half of the intake stroke, and with the fuel supplied in the early injection assuming a substantially homogeneous distribution in the combustion chamber (36) of the cylinder (12) at the ignition time.

6. Method according to Claim 5, **characterized in that** the second, late injection takes place in the second half of the compression stroke and the fuel supplied in the late injection is concentrated substantially in the region of a spark plug (32) of the combustion chamber (36) of the cylinder (12) at the ignition time.

7. Method according to one of the preceding claims, **characterized in that** the internal combustion engine (10) is capable of stratified-charge operation, with the stratified-charge operation being air-controlled and/or wall-controlled.

8. Method according to one of the preceding claims, **characterized in that** a combustion chamber air flow of the internal combustion engine (10) has a swirl axis which runs in particular transversely with respect to the piston movement.

9. Method according to one of the preceding claims, **characterized in that** a proportion of the fuel injected in the late injection is at least 60%, in particular at least 70%, of an injected total fuel quantity.

10. Use of a method according to one of Claims 1 to 9 for heating up at least one catalytic converter (16, 18) which is positioned downstream of the internal combustion engine (10), in particular after a cold start.

11. Use according to Claim 10, **characterized in that** a temperature (Tₖₐₜ) of the catalytic converter (16, 18) is measured and/or modelled.

12. Use according to Claim 11, **characterized in that** a temperature (Tₖₐₜ) of the catalytic converter (16, 18) is determined on the basis of a time which has elapsed since the engine was started and/or crankshaft rotations since the engine was started and/or a distance travelled since the engine was started and/or a cumulative exhaust-gas heat flow.

## Revendications

1. Procédé pour augmenter au moins temporairement une température de gaz d'échappement d'un moteur à combustion interne (10) à injection directe et à allumage commandé par au moins une mesure utilisant un moteur, l'au moins une mesure utilisant un moteur comprenant un retard à l'allumage et une injection multiple (ME), et, au cours de l'injection multiple (ME), pendant un temps d'admission et de compression d'un cylindre (12) du moteur à combustion interne (10), au moins deux injections de carburant étant effectuées dans le cylindre (12) et la injection dernière de ces injections s'effectuant pendant un temps de compression du cylindre (12) avec une fin de commande d'un angle d'injection (α_{EE}) située dans le temps au moins entre 80 et 10° avant le point mort d'allumage supérieur (ZOT), **caractérisé en ce qu'**un angle d'allumage (α_{Z}) est ajusté au moins temporaire entre 10 et 45° après le point mort d'allumage ZOT et une distance angulaire entre la fin de l'injection (α_{EE}) de la injection dernière et l'angle d'allumage (α_{Z}) étant modifiée en fonction d'un régime du moteur et/ou d'une pression d'injection, la distance angulaire augmentant avec l'augmentation du régime et diminuant avec l'augmentation de la pression d'injection.

2. Procédé selon la revendication 1, **caractérisé en ce que** la fin de commande de l'angle d'injection (α_{EE}) de la injection dernière est ajusté entre 45 et 25° avant le point mort d'allumage ZOT, notamment entre 40° et 35° avant le ZOT.

3. Procédé selon la revendication 1 ou 2, **caractérisé en ce que** l'angle d'allumage (α_{Z}) est ajusté entre 20 et 45° après le ZOT, notamment entre 25 et 35° après le ZOT.

4. Procédé selon la revendication 1, **caractérisé en ce que** pour un régime du moteur compris entre 1000 et 1500 min⁻¹, on ajuste une distance angulaire entre la fin de la commande de l'angle d'injection (α_{EE}) de la injection dernière et l'angle d'allumage (α_{Z}) de 50 à 80°, notamment de 60 à 70°.

5. Procédé selon l'une quelconque des revendications précédentes, **caractérisé en ce que** l'injection multiple (ME) comprend deux injections, la première injection initiale se produisant essentiellement pendant un temps d'admission, notamment une première moitié du temps d'admission, et le carburant acheminé pendant la première injection ayant à l'instant d'allumage une distribution essentiellement homogène dans la chambre de combustion (36) du cylindre (12).

6. Procédé selon la revendication 5, **caractérisé en ce que** la deuxième injection ultérieure a lieu dans la deuxième moitié du temps de compression et le carburant acheminé dans la deuxième injection se concentre à l'instant d'allumage essentiellement dans la région d'une bougie d'allumage (32) de la chambre de combustion (36) du cylindre (12).

7. Procédé selon l'une quelconque des revendications précédentes, **caractérisé en ce que** le moteur à combustion interne (10) est capable d'accepter une charge stratifiée, le fonctionnement par charge stratifiée étant assisté par air et/ou par parois.

8. Procédé selon l'une quelconque des revendications précédentes, **caractérisé en ce qu'**un écoulement d'air de la chambre de combustion dans le moteur à combustion interne (10) présente un axe de tourbillonnement s'étendant notamment transversalement au mouvement du piston.

9. Procédé selon l'une quelconque des revendications précédentes, **caractérisé en ce qu'**une proportion du carburant injecté dans la injection dernière représente au moins 60 %, notamment au moins 70 % de la quantité totale de carburant injectée.

10. Utilisation d'un procédé selon l'une quelconque des revendications 1 à 9, pour chauffer au moins un catalyseur (16, 18) monté derrière le moteur à combustion interne (10), notamment après un démarrage du moteur.

11. Utilisation selon la revendication 10, **caractérisée en ce que** l'on mesure et/ou l'on modélise une température (T_{Kat}) du catalyseur (16, 18).

12. Utilisation selon la revendication 11, **caractérisée en ce que** l'on détermine une température (T_{Kat}) du catalyseur (16, 18) à l'aide d'un temps écoulé depuis le démarrage du moteur et/ou à l'aide des rotations du vilebrequin effectuées depuis le démarrage du moteur et/ou à l'aide de la distance parcourue depuis le démarrage du moteur et/ou à l'aide d'un flux de chaleur de gaz d'échappement cumulé.
